# EUROPÄISCHE PATENTANMELDUNG

(11) **EP 0 789 437 A2**
(43) Veröffentlichungstag der Anmeldung: **13.08.1997**
(21) Anmeldenummer: 97810008.9
(22) Anmeldetag: 10.01.1997
(51) Int. Cl.: H02G 5/06

(54) **Leitungsabschnitt einer gasisolierten Leitung**

(30) Priorität: 08.02.1996 DE 19604481
(71) Anmelder: ASEA BROWN BOVERI AG, 5400 Baden (CH)
(72) Erfinder: Leijon, Mats, Dr., 72335 Västeras (SE); Ming, Li, Dr., 72341 Västeras (SE); Rongsheng, Liu, Dr., 72213 Västeras (SE); Windmar, Dan, Dr., 74042 Vittinge (SE); Moritz, Bertil, 72348 Västeras (SE)
(74) Vertreter: Kaiser, Helmut

(57) **Zusammenfassung**

Der Leitungsabschnitt einer gasisolierten Leitung (1) enthält einen hochspannungsführenden Stromleiter (4) und ein den Stromleiter (4) auf Isolierstützern (2) haltendes, isoliergasgefülltes Druckrohr (3) aus thermoplastischem Material. Das Druckrohr (3) weist zwei stirnseitig miteinander verschweisste Rohrabschnitte (6, 7) auf, welche an den einander zugewandten Stirnseiten in radialer Richtung jeweils trompetenartig aufgeweitet sind.

Dieser Leiterabschnitt lässt sich äusserst kostengünstig herstellen und zeichnet sich zugleich durch hervorragende dielektrische Eigenschaften aus.

## Beschreibung

### TECHNISCHES GEBIET

Bei der Erfindung wird ausgegangen von einem Leitungsabschnitt einer gasisolierten Leitung mit mindestens einem hochspannungsführenden Stromleiter und einem den mindestens einen Stromleiter auf Isolierstützern haltenden, isoliergasgefüllten Druckrohr aus thermoplastischem Material. Gasisolierte Leitungen werden mit Vorteil zur Energieübertragung in Ballungszentren verwendet, da sie unterirdisch verlegt werden und ohne erhebliche Beeinträchtigung der durch den Verkehr, die Wasser- und Gasversorgung sowie die Abwasserentsorgung bestimmten Infrastruktur erstellt oder erweitert können.

### STAND DER TECHNIK

Ein Leitungsabschnitt der eingangs genannten Art ist beispielsweise aus US-A-4,415,763 bekannt. In dieser Patentveröffentlichung ist eine gasisolierte Leitung beschrieben, bei der ein hochspannungsführender Stromleiter in einem mit komprimiertem SF₆ gefüllten Rohr aus Isoliermaterial, wie typischerweise Polyäthylen, angeordnet ist. Das Isolierrohr trägt auf seiner Mantelfläche eine feldsteuernde und gegebenenfalls auftretenden Rückstrom führende Schicht aus leitendem oder halbleitendem Material.

### KURZE DARSTELLUNG DER ERFINDUNG

Der Erfindung, wie sie in den Patentansprüchen angegeben ist, liegt die Aufgabe zugrunde, einen Leitungsabschnitt der eingangs genannten Art zu schaffen, welcher in besonders einfacher und kostengünstiger Weise hergestellt und gewartet werden kann, und welcher sich zugleich durch gute dielektrische Eigenschaften auszeichnet.

Der Leitungsabschnitt nach der Erfindung kann ohne kostenintensive Flanschverbindungen durch abschnittsweise aufeinanderfolgendes Verschweissen von Rohrabschnitten aus thermoplastischem Material preisgünstig und schnell gefertigt werden. Mit dem Verschweissen zweier aufeinanderfolgender Rohrabschnitte kann zugleich auch ein trompetenartiges Aufweiten der einander zugewandter Enden der beiden Rohrabschnitte in radialer Richtung kombiniert werden. Durch dieses Aufweiten werden an der Schweissstelle der beiden Rohrabschnitte vorhandene Kanten wirksam abgeschirmt und so das dielektrische Verhalten der gasisolierten Leitung ohne zusätzliche Massnahmen verbessert. Das Aufweiten kann in einfacher Weise durch ein konisch geformtes Werkzeug ausgeführt werden, welches beim Erwärmen der einander zugewandten Enden der zu verschweissenden Rohrabschnitte mit einer geringen Vorschubkraft unter Bildung der beiden Aufweitungen in die Rohrenden eingeschoben wird.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen radial geführten Schnitt durch eine Ausführungsform eines Leitungsabschnitts einer gasisolierten Leitung nach der Erfindung, und
- Fig.2: eine Aufsicht in Pfeilrichtung auf einen längs II-II geführten Schnitt durch den Leitungsabschnitt nach Fig.1.

### WEG ZUR AUSFÜHRUNG DER ERFINDUNG

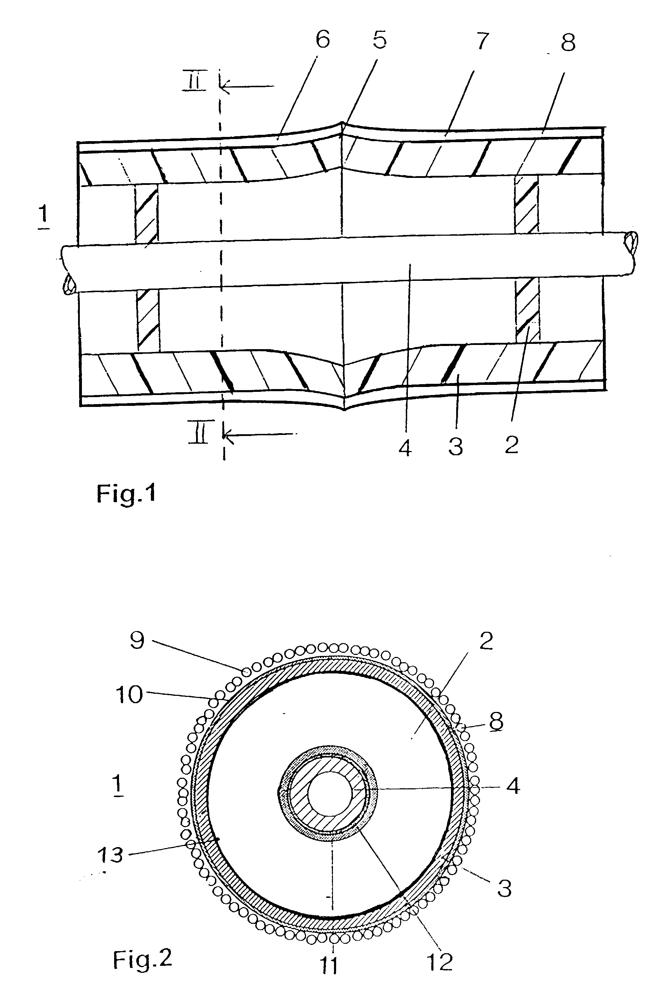

In beiden Figuren beziehen sich gleiche Bezugszeichen auf gleichwirkende Teile. Der in den Figuren 1 und 2 dargestellte Leitungsabschnitt einer gasisolierten Leitung 1 weist einen auf Stützisolatoren 2 in einem Druckrohr 3 zentral gelagerten Stromleiter 4 auf, welcher axialsymmetrisch und hohl ausgebildet ist und sich auf einem Hochspannungspotential von beispielsweise 220 kV befindet. Das Druckrohr 3 ist mit einem Isoliergas, wie etwa SF₆, von bis zu einigen bar Druck gefüllt und besteht aus einem Isolierstoff, wobei als Material für den Isolierstoff ein thermoplastisches Polymer verwendet wird. Zu Zwecken der elektrostatischen Abschirmung des Leiterabschnitts kann der Thermoplast mit einem elektrisch leitfähigen Material, beispielsweise mit Russ, gefüllt sein. Wichtig ist vor allem, dass der Thermoplast aus nichtvernetztem Material besteht und sich bei erhöhten Temperaturen gut verformen und gut schweissen lässt. Ein geeignetes thermoplastisches Material ist beispielsweise ein Polyäthylen hoher Dichte.

Das Druckrohr 3 ist aus ca. 4 - 12 m langen Rohrabschnitten aufgebaut, welche miteinander stirnseitig verschweisst sind. An der Schweissstelle 5 zweier aufeinanderfolgender Rohrabschnitte 6, 7 sind die miteinander verschweissten Enden der beiden Rohrabschnitte trompetenartig aufgeweitet. Mit einer konischen Aufweitung, die an der Schweissstelle 5 einen um wenige, etwa 2 bis 4%, grösseren Durchmesser als das unveränderte Teil des Rohrabschnitts 6, 7 aufweist, wird bereits eine wirkungsvolle dielektrische Abschirmung von an der Schweissstelle vorhandenen Kanten und Materialinhomogenitäten erreicht.

Es ist zweckmässig, das thermoplastische Material des Druckrohrs 3 mit elektrisch leitfähigem Material, wie insbesondere Russ, zu füllen, da so zum einen die gasisolierte Leitung 1 nach aussen elektrostatisch wirkungsvoll abgeschirmt ist, und da so zum anderen dem Druckrohr ein definiertes Potential zugeordnet ist und eine besonders gute Abschirmung der im Bereich der aufgeweiteten Enden der Rohrabschnitte 6, 7 vorgesehenen Schweissstelle 5 erzielt wird.

Bei einem Mehrphasensystem, bei dem jede Phase in einem separaten Druckrohr angeordnet ist, reicht es im allgemeinen aus, wenn parallel zu den Druckrohren ein der Aufnahme eines Ausgleichsstroms dienender Rückleiter angeordnet ist. Mit Vorteil kann ein solcher Rückleiter aber auch auf der Mantelfläche des Druckrohrs oder im Druckrohr lokalisiert sein. Aus den Figuren 1 und 2 ist ein auf der Mantelfläche des Druckrohrs 3 angeordneter Rückleiter 8 ersichtlich, welcher der Aufnahme von Kapselungs- oder Erdströmen dient. Dieser Rückleiter ist mit Vorteil von einem das Druckrohr schlauchartig umgebenden Gewebe 9 aus einem stromleitenden Material, etwa einem Metalldrahtgewebe auf der Basis von Kupfer oder Aluminium oder einer Kupfer- oder Aluminiumlegierung, gebildet.

Auf der Mantelfläche des Druckrohrs 3 ist eine vom Metalldrahtgewebe 9 umgebene Schicht 10 aus elektrisch halbleitendem Material aufgebracht. Diese halbleitende Schicht schirmt die gasisolierte Leitung 1 elektrostatisch nach aussen ab. Diese Schirmwirkung wird ohne das Metalldrahtgewebe 9 erreicht. Ist das Metalldrahtgewebe 9 - wie beschrieben - vorgesehen, so homogenisiert die Schicht 10 zugleich das durch die einzelnen Drähte des Metalldrahtgewebes 9 gegebenenfalls erheblich verzerrte elektrostatische Feld der gasisolierten Leitung 1.

Auf der dem Stromleiter 4 zugewandten Innenfläche der Rohrabschnitte 6, 7 ist eine kriechstromhemmende Schicht 13 vorgesehenen. Diese Schicht enthält ein bei hohen Temperaturen wasserabgebendes Material, wie insbesondere in Form von Hydrargillit kristallisiertes Aluminiumhydroxid (Al(OH)₃). Lagert sich bei Betrieb der gasisolierten Leitung 1 ein spitze Kanten aufweisendes metallisches Teilchen auf der Schicht 13 ab, so erhitzen sich diese Kanten beim Auftreten von elektrischen Teilentladungen stark. Im Bereich der Kanten vorhandenes Al(OH)₃ wird lokal auf mehrere 100 °C erhitzt und gibt hierbei geringe Wassermengen ab, welche mit dem metallischen Material der Kanten reagieren und dieses Material unter Bildung eines dielektrisch unschädlichen, kantenfreien Teilchens wegoxidieren. Kriechströme und durch diese Kriechströme hervorgerufene Spuren auf der Innenfläche des Druckrohrs werden so vermieden.

Anstelle von Al(OH)₃ kann auch ein anderes Material verwendet werden, welches beim Erhitzen eine mit den erhitzten Kanten des metallischen Teilchens reagierende gas- oder dampfförmige Substanz abgibt.

Es ist besonders vorteilhaft, die gegebenenfalls vorgesehenen Schichten 10 bzw. 13 jeweils aus einem Polymer zu fertigen, in das das halbleitende Material bzw. das gas- oder dampf abgebende Material als Füllstoff eingebettet ist. Wird als Polymer ein Polymer verwendet, das das thermoplastische Material des Druckrohrs 3 bildet, so kann das beschichtete Druckrohr in besonders kostensparender Weise etwa durch Koextrusion des druckrohrbildenden, des mit halbleitendem und/oder des mit gas- oder dampfabgebendem Material gefüllten Polymers hergestellt werden. Ein derart hergestelltes Rohr weist eine einzige Polymermatrix mit unterschiedlich wirkenden Oberflächenschichten auf. Aufgrund dieses Aufbaus werden Poren in den Auflageflächen der beiden Schichten 10, 13 weitestgehend vermieden und wird damit auch das Risiko des Auftretens unerwünschter Teilentladungen im Material des beschichteten Druckrohrs ganz wesentlich verringert.

Eine Verbesserung der dielektrischen Festigkeit des Leiterabschnitts der gasisolierten Leitung kann zusätzlich noch dadurch erreicht werden, dass der im Druckrohr 3 gehaltene Stromleiter 4 einen Mantel 11 aus Isoliermaterial aufweist. Um unerwünschte dielektrische Belastungen zwischen Stromleiter 4 und dem Isoliermantel 11 zu vermeiden, trägt der Stromleiter auf seiner Mantelfläche eine Schicht 12 aus elektrisch halbleitendem Material, auf der der Isoliermantel 11 angebracht ist.

### Bezugszeichenliste

- 1: gasisolierte Leitung
- 2: Stützisolatoren
- 3: Druckrohr
- 4: Stromleiter
- 5: Schweissstelle
- 6, 7: Rohrabschnitte
- 8: Rückleiter
- 9: Metalldrahtgewebe
- 10: halbleitende Schicht
- 11: Isoliermantel
- 12: halbleitende Schicht
- 13: kriechstromhemmende Schicht

## Patentansprüche

1. Leitungsabschnitt einer gasisolierten Leitung (1) mit mindestens einem hochspannungsführenden Stromleiter (4) und mit einem den mindestens einen Stromleiter (4) auf Isolierstützern (2) haltenden, isoliergasgefüllten Druckrohr (3) aus thermoplastischem Material, dadurch gekennzeichnet, dass das Druckrohr (3) mindestens zwei stirnseitig miteinander verschweisste Rohrabschnitte (6, 7) aufweist, welche an den einander zugewandten Stirnseiten in radialer Richtung jeweils trompetenartig aufgeweitet sind.

2. Leitungsabschnitt nach Anspruch 1, dadurch gekennzeichnet, dass das thermoplastische Material mit elektrisch leitfähigem Material, wie insbesondere Russ, gefüllt ist.

3. Leitungsabschnitt nach einem der Ansprüche 1 oder 2, dadurch gekennzeichnet, dass auf der Mantelfläche der Rohrabschnitte (6, 7) eine potentialsteuernde Schicht (10) vorgesehen ist.

4. Leitungsabschnitt nach Anspruch 3, dadurch gekennzeichnet, dass die potentialsteuernde Schicht (10) ein elektrisch halbleitendes Material enthält.

5. Leitungsabschnitt nach einem der Ansprüche 1 bis 4, dadurch gekennzeichnet, dass auf der dem Stromleiter (4) zugewandten Innenfläche der Rohrabschnitte (6, 7) eine kriechstromhemmende Schicht (13) vorgesehenen ist.

6. Leitungsabschnitt nach Anspruch 5, dadurch gekennzeichnet, dass die kriechstromhemmende Schicht (13) ein bei hohen Temperaturen gas- oder dampfabgebendes Material enthält.

7. Leitungsabschnitt nach Anspruch 6, dadurch gekennzeichnet, dass das Material Al(OH)₃.

8. Leitungsabschnitt nach einem der Ansprüche 4 bis 7, dadurch gekennzeichnet, dass die potentialsteuernde (10) und/oder die kriechstromhemmende Schicht (13) jeweils ein thermoplastisches Polymer enthalten, welches mit dem halbleitendem und/oder bei hohen Temperaturen gas- oder dampfabgebendem Material gefüllt ist.

9. Leitungsabschnitt nach Anspruch 8, dadurch gekennzeichnet, dass das Druckrohr (3), die potentialsteuernde (10) und/oder die kriechstromhemmende Schicht (13) jeweils das gleiche thermoplastische Polymer enthalten.

10. Leitungsabschnitt nach einem der Ansprüche 1 bis 9 mit einem auf der Mantelfläche des Druckrohrs (3) vorgesehenen Leiter (8) aus elektrisch leitendem Material zum Führen von Kapselungsstrom, dadurch gekennzeichnet, dass der Kapselungsleiter (8) ein das Druckrohr (3) schlauchartig umgebendes Metalldrahtgewebe (9) enthält.

11. Leitungsabschnitt nach einem der Ansprüche 1 bis 10,
dadurch gekennzeichnet, dass der im Druckrohr (3) gehaltene Stromleiter (4) von einem Mantel (11) aus Isoliermaterial umgeben ist.

12. Leitungsabschnitt nach Anspruch 11, dadurch gekennzeichnet, dass zwischen dem Stromleiter (4) und dem Isoliermantel (11) eine Schicht (12) aus elektrisch halbleitendem Material angeordnet ist.
